# FASCICULE DE BREVET EUROPEEN

(11) **EP 2 512 201 B1**
(45) Date de publication et mention de la délivrance du brevet: **22.03.2017**
(21) Numéro de dépôt: 12164051.0
(22) Date de dépôt: 13.04.2012
(51) Int. Cl.: H04W 84/18

(54) **Station émettrice/réceptrice pour former un noeud d'un réseau de télécommunications et procédé de télécommunications associé**
Sende/empfangsstation und verfahren zur Herstellung eines Telekommunikationsnetzknotens
Transmitting/receiving station and method for forming a telecommunications network node

(30) Priorité: 14.04.2011 FR 1101170
(43) Date de publication de la demande: 17.10.2012
(73) Titulaire: Thales, 92200 Neuilly Sur Seine (FR)
(72) Inventeur: HETHUIN, Serge, 92704 Colombes Cedex (FR); BUCAILLE, Isabelle, 92704 Colombes Cedex (FR); LANTZ, Cyril, 92704 Colombes Cedex (FR)
(74) Mandataire: Lavoix

(56) Documents cités:
- WO-A1-2009/150245
- FR-A1- 2 929 781
- US-A1- 2002 077 151

## Description

La présente invention concerne une station émettrice/réceptrice pour former un noeud d'un réseau de télécommunications pour former un noeud d'un réseau de télécommunications, cette station comportant au moins deux modules radio émetteur/récepteur et un module de commande et dans laquelle chaque module émetteur/récepteur est adapté pour fonctionner alternativement en tant que station « abonné » pour établir une connexion avec une station de base d'un premier autre noeud et en tant que station de base pour établir une connexion avec une station « abonné » d'un second autre noeud, en fonction de commandes du module de commande, le module de commande est adapté pour déterminer ou recevoir au moins une modification de l'état du réseau et pour commander dynamiquement au moins un changement de fonctionnement d'au moins un module émetteur/récepteur, de station « abonné » vers station de base ou inversement, en fonction d'au moins la modification déterminée.

Plus précisément, la présente invention concerne le domaine des réseaux ad hoc, qui sont dépourvus d'infrastructure fixe et dans lesquels des stations équipés de moyens d'émission et/ou réception radios et de protocoles adéquats forment les noeuds d'un réseau.

Le mode ad hoc des réseaux radio repose classiquement sur deux approches distinctes. La première, appelée « flat approach », consiste à considérer que tous les noeuds sont d'égale importance à tout instant et nécessite un échange important de signalisation entre les noeuds, une partie de la bande passante étant donc dédiée à cet effet. En outre, il est difficile de synchroniser globalement le réseau, d'optimiser l'utilisation des ressources radio sans coordinateur du réseau (protocole TDMA difficile à mettre en place dans un réseau à plat dit « flat ») et la charge du réseau devient importante en cas de pertes de liens.

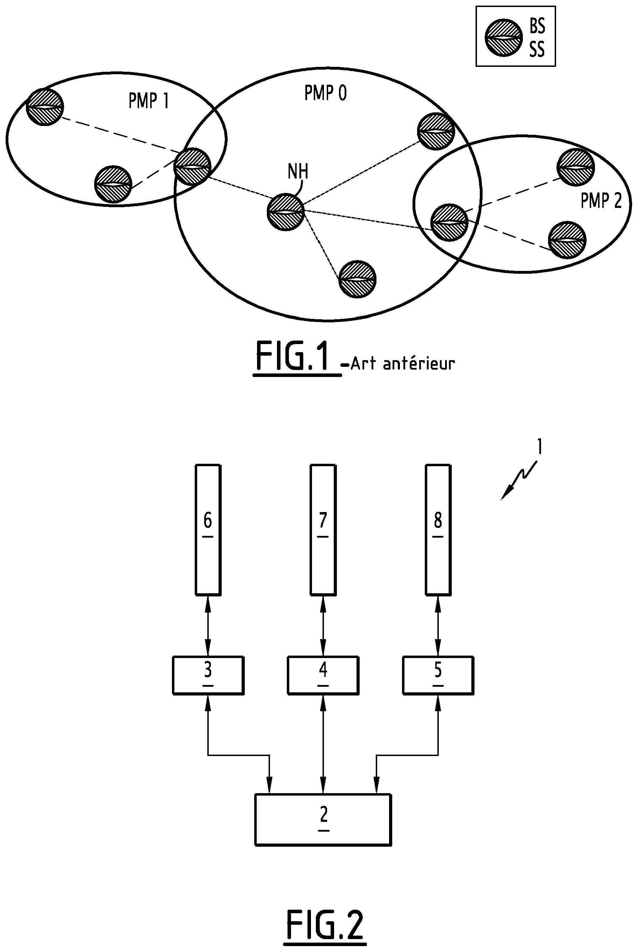

La seconde approche consiste à structurer un réseau ad hoc en un empilement de clusters, chaque cluster étant, par exemple, une cellule de type Point-à-MultiPoint (PMP) comme dans le WiMAX (IEEE 802.16). Le réseau résultant est basé typiquement sur une architecture arborescente comme représenté en figure 1. Le noeud central appelé Network Head (NH), en haut de l'architecture, ie qui n'est rattaché à aucune station de niveau supérieur, est chargé de la coordination du réseau. Les noeuds sont connectés au maximum à une seule station de niveau hiérarchique supérieur. Dans le document FR 0801869, un noeud d'un tel réseau comporte deux radios par noeud, chaque radio pouvant tour à tour être station de base (BS) pour un cluster d'ordre inférieur ou station d'abonné (SS) pour le cluster d'ordre supérieur. Cette approche permet déjà de limiter très fortement les modifications à apporter à la couche d'accès MAC (« Medium Access Control »), et allie efficacité et réduction de coût.

Elle présente cependant un certain nombre d'inconvénients

Tout d'abord, l'utilisation de PMP occasionne un partage de la bande passante disponible entre l'ensemble des abonnés d'un même cluster,

D'autre part, dans le cas d'utilisation d'antennes intelligentes, par exemple de type orientable électroniquement de façon rapide (dites « FESA » pour « Fast electronically Steerable Antenna »), la station BS d'un noeud doit intégrer une procédure de contrôle en temps réel (RTC) ce qui augmente les difficultés de mise en oeuvre, à l'inverse du contrôle hors temps réel en AFS (cf document FR 0805151).

De plus, la fusion de réseaux peut s'avérer compliquée et à moyen terme, la mise en oeuvre de nouvelles technologies radio est fortement compromise.

On connaît le document US 2002/077151 A1, qui décrit un réseau de télécommunication comportant des stations de base nanocellule pour établir des liens radio avec une ou plusieurs stations mobiles, stations de base émettrices/réceptrices ou autres stations de base nanocellule. Une stations de base nanocellule comprend un ou plusieurs émetteur(s)/récepteur(s), l'un d'entre eux fournissant une fonction de station de base et l'un d'entre eux fournissant une fonction de station mobile.

A cet effet, suivant un premier aspect, l'invention a pour objet une station émettrice/réceptrice pour former un noeud d'un réseau de télécommunications du type précité, caractérisée en ce que le module de commande est adapté pour que le nombre de stations « abonné » connectées à une station de base soit au plus égal à 1.

L'invention permet ainsi de créer des réseaux ad hoc utilisant de Multiples liaisons Point à Point (on parlera ci-après de « réseau MPP »), de conserver les avantages des structures arborescentes (à l'inverse des structures à plat dites « flat »), d'améliorer l'efficacité de bout en bout du réseau en évitant le partage de la bande passante par plusieurs abonnés et de renforcer l'indépendance du fonctionnement du réseau par rapport aux technologies radio utilisées, ces radios pouvant être du type WiFi, WiMAX ou autres.

Dans des modes de réalisation, la station émettrice/réceptrice pour former un noeud d'un réseau de télécommunications suivant l'invention comporte en outre une ou plusieurs des caractéristiques suivantes :
- lorsque le noeud ne comporte plus de station « abonné » (SS) non connectée, le module de commande est adapté pour commander un fonctionnement alternativement en station de base et en station « abonné » d'au moins un émetteur/récepteur non connecté du noeud ;
- ledit fonctionnement est alterné en fonction d'un paramètre temporel aléatoire ;
- ladite station constituant un noeud d'un premier réseau :
   - une station de base non connectée du noeud est adaptée pour insérer un paramètre indiquant un degré d'importance du premier réseau dans une trame émise par ladite station de base ; et/ou
   - lorsqu'au cours d'un fonctionnement alterné d'un module émetteur/récepteur du noeud, ledit module émetteur récepteur fonctionnant alors en station « abonné » détecte une trame d'une station de base non connectée d'un autre noeud d'un second réseau distinct du premier réseau, ladite trame indiquant un degré d'importance du second réseau, le module de commande du noeud du premier réseau est adapté pour :
      - si le degré d'importance du second réseau est inférieur à un degré d'importance du premier réseau, interdire la connexion entre le module émetteur/récepteur fonctionnant en station « abonné » dudit noeud et ladite station de base de l'autre noeud ; et
      - si le degré d'importance du second réseau est supérieur au degré d'importance du premier réseau, autoriser la connexion entre le module émetteur/récepteur du noeud fonctionnant en station « abonné » et ladite station de base de l'autre noeud ;
- lorsqu'au cours d'un fonctionnement alterné d'un module émetteur récepteur du noeud, une connexion, jugée prioritaire, s'établit entre une station de base d'un autre noeud et ledit module émetteur/récepteur fonctionnant alors en station « abonné », et que le nombre de stations « abonné » connectées dans le noeud est supérieur ou égal à 2, le module de commande commande audit module émetteur/récepteur la sortie du fonctionnement alterné et le maintient en station « abonné » tandis qu'il commande aux autres modules émetteurs/récepteurs connectés du noeud qui fonctionnent alors en station « abonné » le passage en station de base ;
- la station connectée à un réseau comporte en outre un module émetteur/récepteur donné qui est adapté pour fonctionner uniquement en station « abonné » non connectée, dans laquelle lorsque le module émetteur/récepteur donné détecte une station de base non connectée d'un noeud non connecté au réseau, alors le module de commande qu'une station « abonné » de la station émettrice/réceptrice se connecte à ladite station de base ;
- ladite station de base du noeud est adaptée pour indiquer son état, connecté ou non connecté, dans une trame qu'elle émet; et le module de commande est adapté pour refuser une connexion de la station « abonné » du noeud avec une station de base d'un autre noeud ayant émis un préambule indiquant un état connecté ; et/ou le module de commande est adapté pour refuser toute connexion de ladite station de base du noeud avec une station « abonné » d'un autre noeud lorsque ladite station de base du noeud est déjà connectée ;
- le module de commande est adapté pour interdire une connexion entre le noeud et un autre noeud, lorsqu'il existe déjà une connexion entre ledit noeud et ledit autre noeud;
- une station « abonné » du noeud fournit un signal de synchronisation à une station de base du noeud, ledit signal de synchronisation étant fonction d'un signal reçu par ladite station « abonné » et transmis par la station de base d'un autre noeud qui est connectée à la station « abonné » ;
- la station émettrice/réceptrice comporte plusieurs stations « abonné », est adaptée pour qu'une seule desdites stations « abonné » du noeud fournisse un signal de synchronisation à chaque station de base du noeud ;
- un signal de synchronisation fonction d'un signal issu de GPS est fourni à l'ensemble des stations de base de la station émettrice/réceptrice ;
- le module de commande est adapté pour commander la station « abonné » du noeud cherchant à se connecter à une station de base pour ne pas écouter un préambule émis par une station de base du noeud.

Suivant un deuxième aspect, l'invention a pour objet un procédé de communication dans un réseau de télécommunication comportant des stations émettrices/réceptrices, une station émettrice/réceptrice comportant un module de commande et au moins deux modules radio émetteur/récepteur adaptés chacun pour fonctionner alternativement en tant que station « abonné » pour établir une connexion avec une station de base d'un premier autre noeud et en tant que station de base pour établir une connexion avec une station « abonné » d'un second autre noeud, en fonction de commandes du module de commande, selon lequel, dans chaque station émettrice/réceptrice :
- il est déterminé au moins une modification de l'état du réseau, et
- au moins un changement de fonctionnement d'au moins un module émetteur/récepteur, de station « abonné » vers station de base ou inversement, est commandé dynamiquement en fonction d'au moins la modification déterminée ; et ledit procédé étant caractérisé en ce que le nombre de stations « abonné » connectées à une station de base doit être au plus égal à 1.

L'invention sera mieux comprise à la lecture de la description qui suit et à l'examen des figures qui l'accompagnent. Ces figures sont données à titre illustratif mais nullement limitatif de l'invention. Ces figures sont les suivantes :
- la figure 1 est une vue d'un réseau PMP de l'art antérieur ;
- la figure 2 est une vue d'une station émettrice/réceptrice dans un mode de mise en oeuvre de l'invention ;
- la figure 3 représente des émissions et réceptions de trames au sein d'un noeud dans un mode de réalisation de l'invention ;
- la figure 4 représente des noeuds radio pour une mise en réseau ad hoc dans un mode de réalisation de l'invention ;
- la figure 5 représente la structure d'un réseau ad hoc dans un mode de réalisation de l'invention ;
- la figure 6 représente la structure d'un réseau ad hoc dans un mode de réalisation de l'invention ;
- la figure 7 représente la structure d'un réseau ad hoc dans un mode de réalisation de l'invention ;
- la figure 8 représente la structure d'un réseau ad hoc dans un mode de réalisation de l'invention ;
- la figure 9 représente la structure d'un réseau ad hoc dans un mode de réalisation de l'invention ;
- la figure 10 représente la structure d'un réseau ad hoc dans un mode de réalisation de l'invention ;
- la figure 11 représente la structure d'un réseau ad hoc dans un mode de réalisation de l'invention ;
- la figure 12 représente la structure d'un réseau ad hoc dans un mode de réalisation de l'invention ;
- la figure 13 représente la structure d'un réseau ad hoc dans un mode de réalisation de l'invention ;
- la figure 14 représente la structure d'un réseau ad hoc dans un mode de réalisation de l'invention ;
- la figure 15 représente la structure d'un réseau ad hoc dans un mode de réalisation de l'invention.

Sur la figure 2 est représentée schématiquement une station émettrice/réceptrice 1 dans un mode de mise en oeuvre de l'invention, destinée à constituer un noeud d'un réseau radio ad hoc. De telles stations émettrices/ réceptrices seront appelées « noeuds » ci-après.

Le noeud 1 comporte un nombre N de modules radios, avec N supérieur ou égal à deux. Dans le cas représenté sur la figure 2 et considéré dans les modes de réalisation décrits ci-dessous, le nombre de modules radios est au moins égal à trois.

Chacun des modules radios 3, 4, 5 est relié d'une part à une unité de commande 2 et d'autre part à une antenne d'émission/réception radio fréquence, dans le cas considéré, respectivement l'antenne 6, 7, 8.

Suivant les modes de réalisation, les antennes sont de type varié, par exemple omnidirectionnelles, sectorielles, sectorielles intelligentes (antennes S-FESA), omnidirectionnelles intelligentes (antennes FESA).

Dans certains modes de réalisation, plusieurs modules radios sont reliés à une même antenne dont le fonctionnement est réparti entre les noeuds.

L'unité de commande 2 est adaptée pour piloter, et synchroniser entre eux et avec le reste du réseau MPP, le fonctionnement des modules radios et éventuellement des antennes et mettre en commun des fonctionnalités d'un noeud d'un réseau MPP selon l'invention, par exemple l'alimentation électrique des modules radios et antennes, une carte mère comprenant les couches hautes du modèle OSI et permettant notamment l'interconnexion des couches 2 et 3.

Chaque module radio 3, 4, 5 comprend une couche d'accès au milieu MAC (Médium Access Control), une couche physique Bande de Base, une couche physique radio fréquence. Ces couches physiques reçoivent le signal radio fréquence en provenance des antennes ou permettent l'émission d'un signal radio fréquence.

Chaque module radio 3, 4, 5 est adapté pour se comporter, sous le pilotage de l'unité de commande 2, alternativement en tant que station « abonné » dite SS (« Subscriber Station ») et en tant que station de base dite BS (« Base Station »), d'un réseau et établir ainsi des connexions avec des SS ou BS d'autres noeuds.

L'unité de commande est adaptée pour déterminer au moins une modification de l'état du réseau et pour commander dynamiquement au moins un changement de fonctionnement d'au moins un module radio, de station « abonné » vers station de base ou inversement, en fonction d'au moins la modification déterminée.

De telles modifications de l'état du réseau comportent par exemple des modifications en termes de charge du réseau, de configuration du réseau, de déplacement relatif entre le noeud et au moins un noeud voisin, de déplacement relatif ente les autre noeuds, de rupture de connexion, d'interférence etc.

Ces changements de fonctionnement donnant lieu à une reconfiguration du noeud et donc du réseau sont réalisés dynamiquement.

Des événements déterminés par l'unité de commande et donnant lieu à des commandes dynamiques relatifs au fonctionnement des modules radio sont en outre décrits ci-après.

Les fonctionnalités caractérisant le comportement d'une station « abonné » et d'une station de base correspondent à celles décrites dans la norme 802.16-2009. Cependant d'autres types de radio, répondant ou pas à d'autres normes peuvent être utilisées.

Notamment, l'appellation de station de base, respectivement de station « abonné » correspond à un choix qui n'est nullement limitatif pour désigner des stations d'un premier type, respectivement d'un second type.

Ces stations pourraient également être nommées respectivement station-maître et station-esclave, point d'accès (en anglais « Access Point » ou AP) et point client, ou encore eNodeB et UE.

Ce qui caractérise les stations du premier type appelées dans cette description stations de base est : l'enregistrement des stations abonnées à travers le mécanisme d'association, la synchronisation des stations abonnées grâce à l'envoi de balises, l'envoi d'informations de contrôles dans la partie DownLink (DL), l'allocation des ressources radio pour les stations abonnées associées.

Ce qui caractérise les stations du second type appelées dans cette description stations « abonné » est : la détection de balises envoyées par les stations de base, l'association avec une station de base, le décodage des informations de contrôles envoyées par la station de base dans la partie DownLink (DL), l'envoi de données dans la partie UpLink (UL) dans les intervalles de temps spécifiés par la station de base. Typiquement les états considérés d'une BS ou SS dans ce qui suit sont les états suivants : BS libre ; BS connectée ; SS en écoute ; SS connectée.

Une BS dans un noeud émet périodiquement une trame avec un préambule sur une fréquence radio qui lui est affectée (soit de façon permanente, soit temporairement). Le préambule fournit aux SS d'autres noeuds qui écoutent cette fréquence radio un certain nombre d'informations : l'identifiant de la BS, l'affectation de créneaux temporels pour communiquer avec la BS. Une période est également affectée aux SS écoutant la fréquence et qui souhaitent se déclarer auprès de la BS, voire se connecter à la BS via une procédure d'association établissant un lien de communication du réseau (appelée aussi connexion ci-après) entre ces BS et SS.

Par ailleurs, une SS d'un noeud peut être en écoute : elle effectue un balayage de différentes fréquences radio et écoute sur chaque fréquence radio ainsi balayée les préambules éventuellement émis par une BS d'un autre noeud à proximité radio. Une SS libre cherchant à se connecter peut ainsi requérir sur la fréquence radio affectée à une BS une association avec cette BS de manière à établir un lien de communication du réseau avec cette BS, correspondant à la fréquence radio de la BS.

Ces liens de communication, établis entre des noeuds distincts, sont utilisés pour transmettre des données d'un point A du réseau vers un point B du réseau, en fonction de tables de routage établies permettant d'identifier les liens à utiliser.

La mise en place de ces connexions entre BB et SS de noeuds distincts crée donc une structure arborescente. Un noeud est adapté pour relayer des données sur un lien montant selon la hiérarchie de la structure arborescente (i.e. d'une SS du noeud vers une BS d'un autre noeud). Il est aussi adapté pour relayer des données sur un lien descendant (i.e. depuis une BS du noeud vers une SS d'un autre noeud).

Ainsi un module radio agissant en tant que SS dans un noeud est adapté pour communiquer en émission/réception avec une station de niveau hiérarchique supérieur tandis qu'un module radio agissant en tant que BS dans un noeud est adapté pour communiquer en émission/réception avec une station de niveau hiérarchique inférieur.

Des règles mises en oeuvre par un procédé de télécommunication dans des modes de réalisation de l'invention sont exposées ci-dessous.

A des fins d'illustration de l'intérêt de ces règles, on a intégré certaines de ces règles dans les noeuds au fur et à mesure de la survenue de dysfonctionnement ou inconvénients mis en évidence en l'absence de ces règles. Toutefois, les règles sélectionnées en fonction des modes de mise en oeuvre opérationnelles de l'invention pourront bien sûr être d'office implémentées dans les noeuds.

Ces règles sont implémentées dans les noeuds radio sous le pilotage des unités de commande respectives, par exemple à l'aide d'instructions logicielles mémorisées dans une mémoire et qui s'exécutent sur un microprocesseur.

Suivant les modes de réalisation, l'invention est mise en oeuvre en appliquant une seule quelconque de ces règles ou, de façon combinée, plusieurs des règles ci-après.

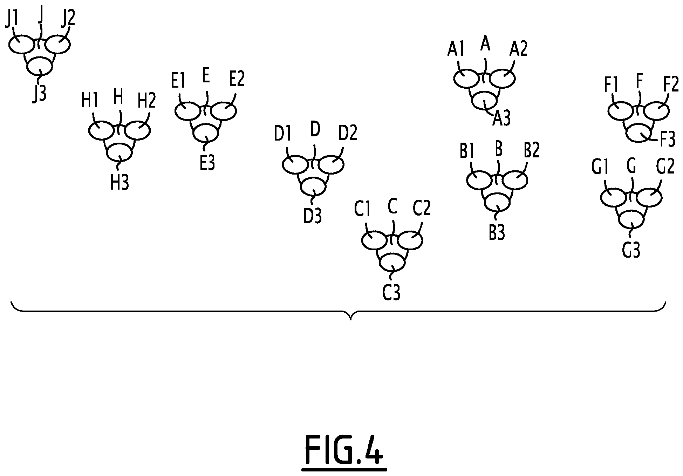

Sur la figure 4, est représenté un ensemble de noeuds à mettre en réseau, référencés A, B, C, D, E, F, G, H, I, J, du type de la station 1 représentée en figure 2.

Les noeuds considérés ont chacun trois modules radio dans le mode de réalisation considéré, mais dans d'autres réalisations, certains au moins pourraient avoir un nombre de modules radios différent.

Pour tout noeud X, avec X prenant les valeurs A à J indiquées ci-dessus, les trois modules radio sont référencés dans l'ensemble des figures 4 à 15, respectivement, X1, X2, X3.

Suivant une règle (règle n°1), si le noeud comporte un nombre N de modules radio, lors d'une tentative de mise en réseau ad hoc, l'unité de commande commande qu'un des modules radio fonctionne de manière dédiée en tant que SS, tandis qu'elle commande que N-1 autres modules radios fonctionnent en tant que BS (dans d'autres modes de réalisation, seul un ou certains de ces modules radio sont placés en BS, les autres en SS).

Ainsi pour tout noeud X, avec X prenant les valeurs A à J indiquées ci-dessus, le module radio X1 agit en tant que SS tandis que les modules X2 et X3 agissent en tant que BS, lors de la mise en réseau.

Lors de cette tentative de mise en réseau, les BS et SS sont donc d'abord en état « libre ».

Chaque BS émet des trames comportant son préambule sur une fréquence radio qui lui est exclusivement attribuée (de façon soit permanente soit temporaire).

Les SS sont en état « libre » et en écoute de leur environnement radio en vue d'une connexion.

Une SS en écoute recherche l'émission de préambules émis par une BS au début de chaque trame. Dans un mode de réalisation, elle est pilotée par l'unité de commande pour ne pas écouter les préambules émis par les BS faisant partie du même noeud qu'elle.

Suivant une autre règle (règle n°2), si une SS d'un noeud détecte une BS libre, alors la SS est autorisée par l'unité de commande du noeud à se connecter à cette BS.

Et une seule connexion maximum peut être établie par BS, sous le contrôle des unités de commande des noeuds.

Pour cela, par exemple, chaque BS d'un noeud est commandée par l'unité de commande du noeud de manière à ne pas accepter plus d'une connexion. Ou encore, une BS est adaptée pour indiquer dans les trames qu'elle émet, par exemple dans le préambule d'une trame, son état « libre » ou « occupé ». Et une SS d'un autre noeud se connectera ou non à la BS en fonction de cet état indiqué par la trame reçue en provenance de la BS, sous le pilotage de l'unité de commande de l'autre noeud.

Similairement, une seule connexion peut être établie par SS, sous le contrôle de l'unité de commande.

Le réseau ad hoc mis en place est donc un réseau composé de multiples liaisons point à point (MPP).

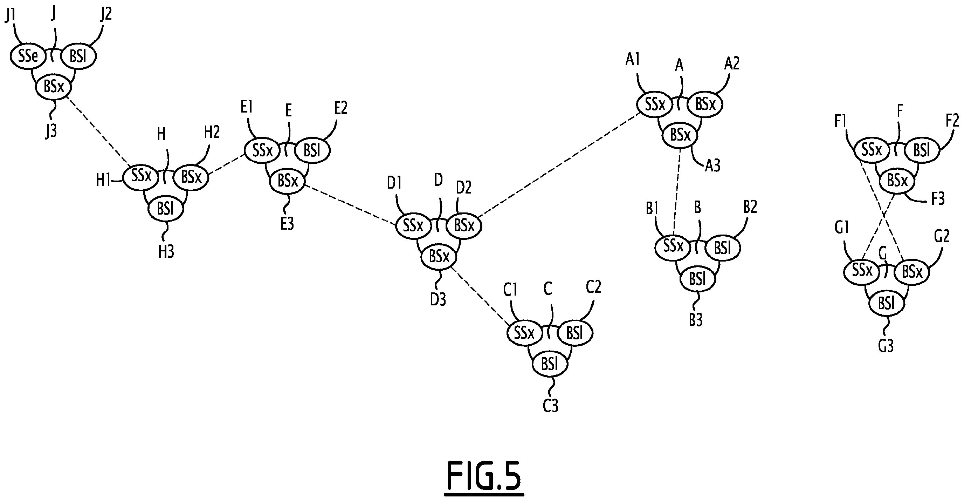

Selon ces règles 1 et 2 citées ci-dessus, un réseau ah hoc 100 est constitué conformément à la topologie représenté en figure 5, à partir des noeuds représentés en figure 4.

Les segments en pointillés représentent les connexions radio établies entre BS et SS de noeuds distincts.

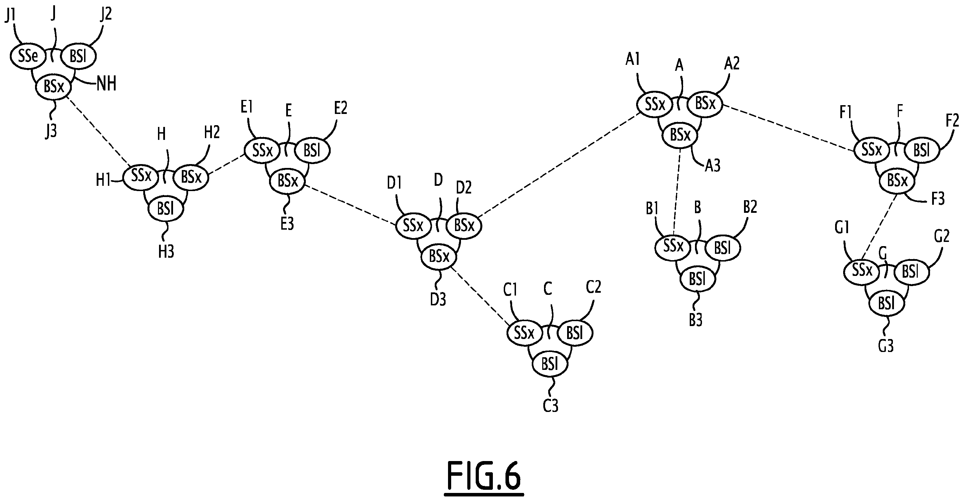

Le mode de fonctionnement et l'état de chaque module radio sont indiqués sur la figure 5 (et sur les figures 6 à 15), de la manière suivante :
- « SSx » indique une SS connectée ;
- « SSe » indique une SS libre, donc en écoute ;
- « BSx » indique une BS connectée ;
- « BSI » indique une BS libre.

Une BS est dite libre lorsqu'elle n'est connectée (ou associée) à aucune SS. Et une SS est dite libre lorsqu'elle n'est connectée (ou associée) à aucune BS. Une BS ne peut être connectée qu'avec une SS et une SS réciproquement ne peut être connectée qu'avec une BS.

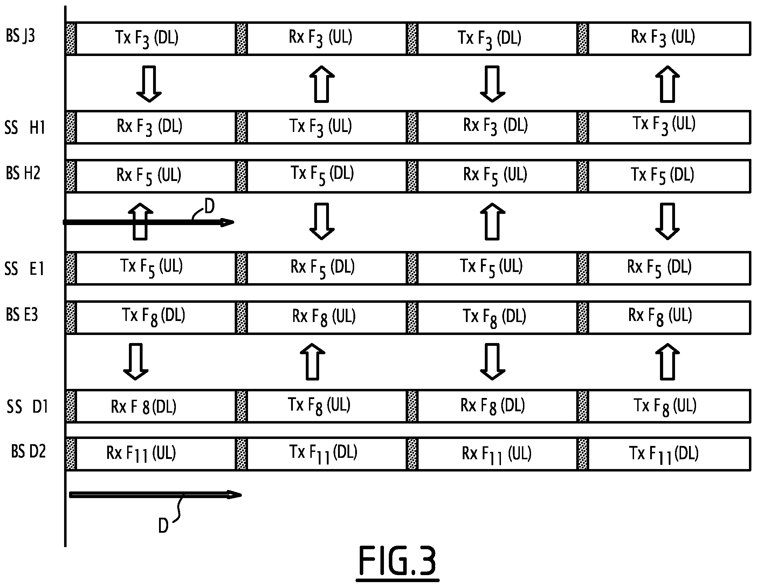

La figure 3 est un chronogramme représentant les échanges au niveau de modules de certains des noeuds représentés en figure 5. : BS J3, SS H1, BS H2, SS E1, BS E3 (attention c'est faux aussi sur le dessin), SS D1.

Le canal radio affecté aux BS J3, H2, E2 et D2 sont respectivement les canaux de fréquences distinctes F3, F5, F8 et F11.

La SS H1 connectée avec la BS J3 émet et reçoit donc sur le canal de fréquence F3, tandis que la SS E1, respectivement la SS D1 émet et reçoit respectivement sur le canal de fréquence F5, respectivement de fréquence F8.

Les modules radio SS et BS d'un même noeud émettent en même temps et reçoivent en même temps. Ces trames d'émission Tx et de réception Rx sont synchronisées entre elles par l'unité de commande du noeud. Afin de limiter les interférences (même si les émissions ont lieu en même temps et si les réceptions ont lieu en même temps), les canaux fréquentiels affectés aux modules radio sont espacés (par exemple d'au moins un canal.

La flèche D indique un décalage d'une demi-trame. Selon qu'un noeud est de rang pair ou impair par rapport à la tête du réseau (encore appelé Network Head NH) qui dans le cas considéré est le noeud J, la trame composée d'un préambule suivi d'une phase de transmission descendante appelée DownLink -DL en abrégé- puis d'une phase de transmission montante appelée UpLink -UL en abrégé- des BSs de ce noeud doit être décalée ou non d'une demi-trame par rapport à un top de synchronisation globale. Ainsi, sur l'exemple de la Figure 5, le décalage d'une demi-trame doit être appliqué sur les BS des noeuds H et D.

Dans l'exemple de la figure 5, une anomalie concerne les noeuds F et G. La SS F1 tend à se connecter à la BS G2. De même la BS F2 est prête à consentir la connexion de la SS G1. Ceci provoque une boucle incompatible avec un fonctionnement stable.

Pour éviter la survenue d'anomalie de ce type, selon une autre règle (règle n°3), il ne peut y avoir deux connexions établies entre deux mêmes noeuds. Ainsi une première connexion entre deux noeuds étant établie, l'unité de commande d'au moins un des noeuds par exemple à travers la table de routage locale, interdit toute connexion supplémentaire entre ces deux noeuds.

Ainsi la liaison G2-F1 n'est ainsi par exemple pas autorisée. La SS F1 vient alors se connecter, par exemple, à la BS A2, conformément à la configuration de la figure 6.

Par défaut, dans une première approche, les connexions sont établies en fonction du premier noeud arrivé dans le réseau et éventuellement modifiées en fonction d'une technique d'optimisation du réseau, comme expliqué plus loin.

Dans une seconde approche, l'établissement des connexions est conditionné par la structure d'un noeud. En effet, le noeud est constitué d'un certain nombre de ressources (N radios avec antennes d'un type donné, ...) et peut ne pas être capable de se connecter selon le type de ressources du noeud.

Optionnellement, l'établissement des connexions est, en plus, contraint par la connaissance par chacun des noeuds de la table de routage globale du réseau ad hoc.

Par ailleurs, il est nécessaire de déterminer la position de la tête de réseau NH (en anglais « Network Head »). Ce NH correspond au noeud qui est source de synchronisation de tous les autres, lorsqu'il n'y a pas de synchronisation globale par GPS. Le NH comporte une SS libre et au moins une BS connectée, de rang hiérarchique supérieur aux autres noeuds du réseau.

Selon une règle (règle n°4), le NH est unique dans un réseau ad hoc. Il peut changer à tout instant suivant les évolutions des noeuds.

Ainsi, dans la configuration de la figure 6, le NH correspond au noeud J.

Partant de la configuration représentée en figure 6, on suppose maintenant que le sous-groupe 100 constitué des noeuds E, H et J se détache (phénomène dit de « splitting » en anglais) des autres noeuds suite à l'éloignement par exemple du noeud E par rapport au noeud D. Lorsque les noeuds E et D sont suffisamment éloignés, le lien radio ne peut plus être maintenu et la connexion entre ces deux noeuds est supprimée. Le NH se trouvant parmi les noeuds E, H et J, les connexions internes au sous-groupe sont conservées. En revanche, le sous-groupe 101, composé des noeuds A, B, C, D, F et G, doit se reconfigurer de manière à faire réapparaître un nouveau NH local. Le noeud D est mécaniquement élu NH du deuxième sous-groupe, possédant la BS de rang supérieur du sous-réseau 101 ainsi créé.

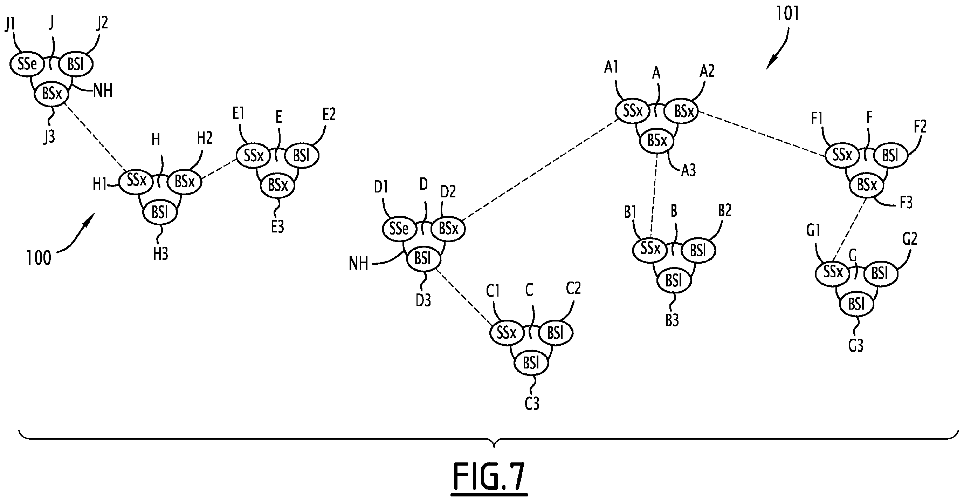

La nouvelle configuration obtenue suite à la séparation des deux sous-groupes 100 et 101 est représentée en figure 7.

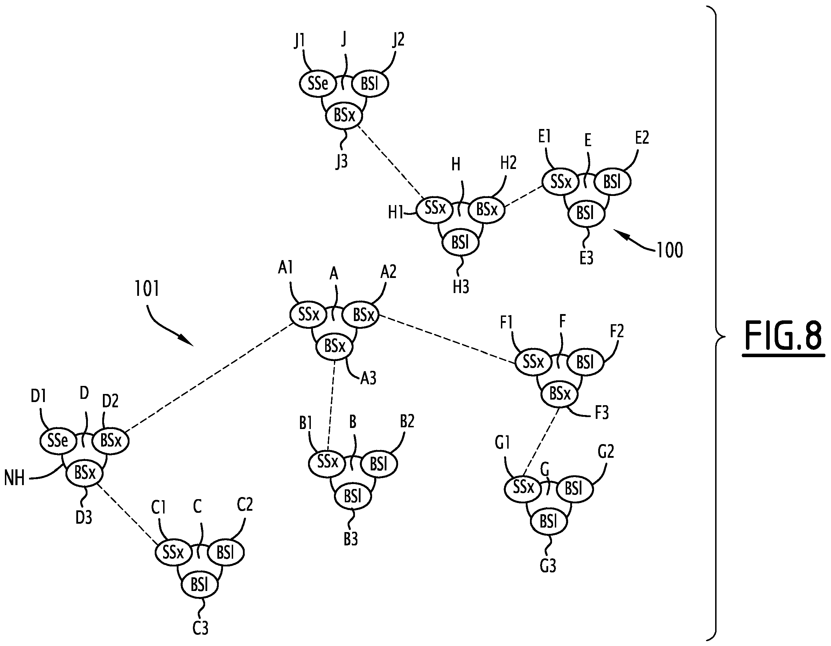

Supposons à présent que le réseau correspondant au sous-groupe 100 se rapproche du réseau correspondant au sous-groupe 101, comme représenté en figure 8. Ces deux réseaux 100, 101 n'ont aucune possibilité de se raccorder en l'état puisque seules des BS non connectées se font face.

En vue de pallier l'occurrence de ce type de problème lors de tentative de fusionnement entre deux réseaux (en anglais « merging »), conformément à une autre règle (règle n°5), lorsqu'il ne reste plus de SS libre dans un noeud, alors au moins une BS sans connexion (si elle existe) du noeud effectue un fonctionnement alterné entre BS et SS (encore appelé par la suite cycle dual) selon un paramétrage temporel donné aléatoire, en fonction de commandes de l'unité de commande du noeud.

Suivant les modes de réalisation, une seule BS libre, ou plusieurs ou toutes les BS libres, du noeud sont basculées en mode dual. Notamment, il peut devenir nécessaire d'avoir plusieurs BS en cycle dual dans un noeud lorsque des antennes sectorielles FESA sont utilisées, afin de permettre le raccordement entre des noeuds en visibilité.

Ainsi, dans le cas correspondant à la figure 8, toutes les BS non connectées des noeuds se mettent en cycle BS-SS selon un rythme aléatoire paramétrable. Ces cycles sont, selon un tirage aléatoire, de durées indépendantes de façon à garantir l'accrochage entre les noeuds.

Le fonctionnement en mode dual permet la mise en oeuvre de nouvelles connexions entre BS et SS.

Ainsi le module radio H3 en fonctionnement BS d'un mode dual et le module radio F2 en fonctionnement SS d'un mode dual établissent une connexion.

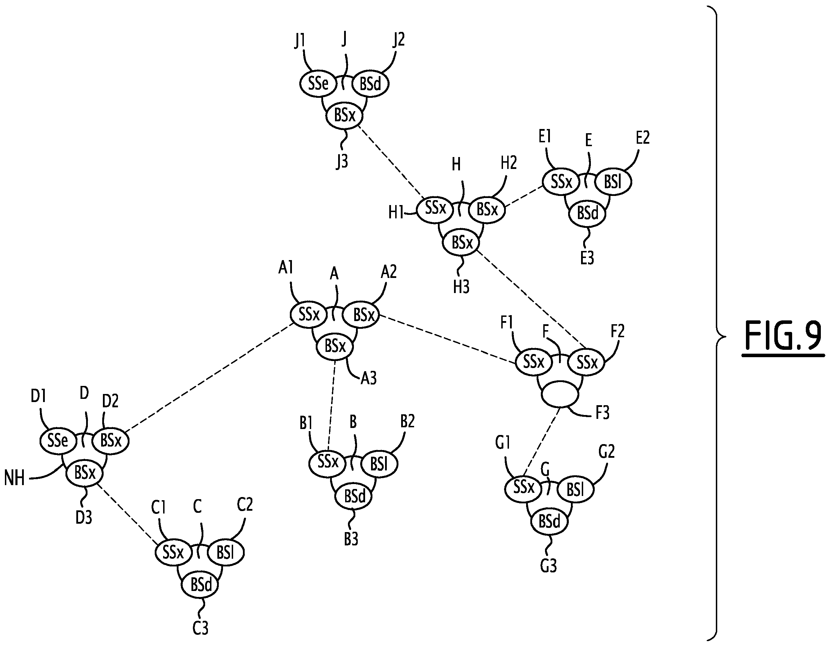

La phase de fusionnement conduit alors à la topologie indiquée en figure 9.

Dans l'exemple représenté en figure 9, deux NH sont représentés pendant cette phase de « merging » des deux réseaux 100, 101.

Pour rappel, un seul NH peut toutefois exister à un moment donné dans le réseau. La procédure de fusionnement des deux réseaux devra donc résoudre cette incohérence et ne retenir qu'une seule tête de réseau.

Une BS d'un noeud transmet à une SS d'un autre noeud (niveau inférieur de l'arborescence) à laquelle elle est connectée un motif de synchronisation afin de synchroniser temporellement les trames (par synchronisation de la SS sur la BS). La synchronisation s'effectue donc par connexion successive depuis un niveau supérieur vers un niveau inférieur. La tête de réseau est donc l'origine de la synchronisation.

En outre, il existe une synchronisation au niveau d'un noeud, pour faire en sorte que les trames d'émissions DL pour les modules radio en mode BS aient lieu en même temps que les trames UL des stations SS d'un même noeud (voir figure 3) lors d'une période Tₓ. Un module radio SS d'un noeud x n'a pas forcément besoin de recevoir cette synchronisation car il ne peut émettre qu'à des moments précis et déterminés par la BS d'un autre noeud y, à laquelle il est connecté. Le but est donc de synchroniser les émissions des BS du noeud x avec les émissions de la SS du noeud x, pour qu'elles aient lieu pendant que le noeud y est en réception.

Ainsi chaque noeud est synchronisé soit en phase, soit en décalage d'une référence temporelle suivant la parité de son rang.

La synchronisation au sein d'un noeud peut être réalisée par GPS qui fournit une référence temporelle commune. Dans ce cas, l'unité de commande du noeud d'une part commande le passage en émission des BS en fonction de la référence commune reçue et d'autre part applique le décalage temporel (0 ou 1 demi-trame) nécessaire à la synchronisation des émissions.

Sans GPS, une SS doit être en mesure de fournir un signal symbolisant le type de trame (DL ou UL) émis par la BS à laquelle elle est connectée (synchronisation dite par dégoulinage ou régénérescence). Cette information peut être extraite par exemple des préambules de trames émises par cette BS.

Il pourrait être également envisageable de se contenter seulement d'un signal indiquant quand la SS est en émission. En supposant que, quelle que soit la quantité d'information qu'une SS doit transmettre, le début ou la fin d'une émission SS survient toujours au même moment par rapport au début de la trame, alors il est relativement aisé de régénérer la synchro grâce à la périodicité de cet instant et au ratio DL/UL qui est de 50%.

Si cet instant (début ou fin d'une émission SS) n'est pas stable dans le temps, la complexité du mécanisme de régénération de la synchronisation risque d'être extrême.

Une méthode simple, basée seulement sur le signal Tx/Rx d'une SS consisterait à faire en sorte que la SS utilise la totalité de la trame UL en envoyant des données de bourrage (« padding »), si nécessaire, en plus des données utiles. Pour cela, il faut soit que la SS demande toujours le maximum de bande passante, soit que l'ordonnanceur (« scheduler ») de la BS alloue directement la totalité de la sous-trame UL à la SS, ce qui est relativement aisé dans la mesure où il ne peut y avoir qu'une seule SS de connectée.

En vue d'assurer la synchronisation des noeuds dans un réseau sans GPS, une alternative est considérée ci-dessous à l'aide soit de la règle 6a, soit de la règle 6b.

Selon la règle 6a, il ne peut exister, à tout instant, qu'une seule SS maximum dans un noeud.

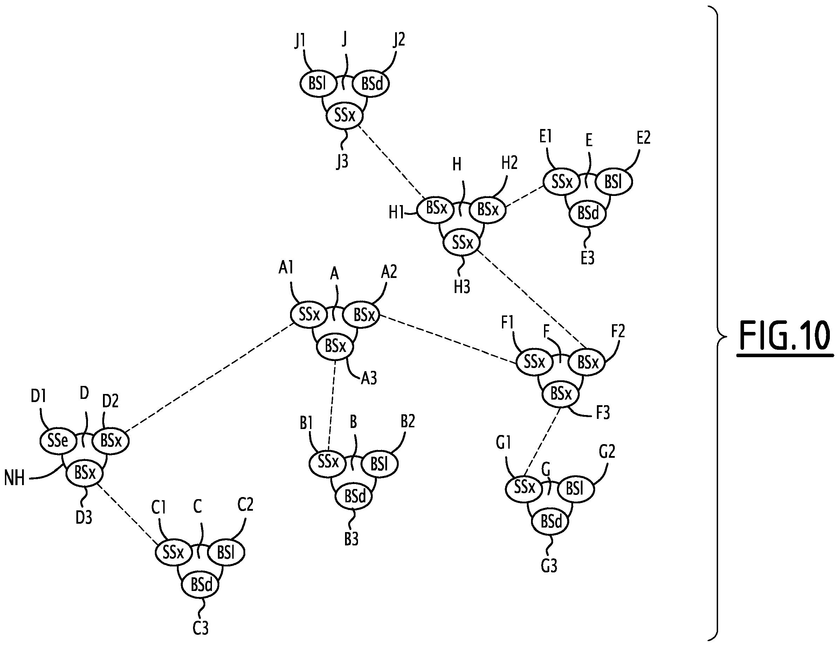

Si on applique cette règle 6a à la configuration de la figure 9, l'unité de commande du noeud F ne peut accepter la nouvelle connexion entre le module radio H3 en rôle BS et le module radio F2 en rôle SS, puisque le module radio F1 est déjà une SS. Une inversion de sens de la connexion doit donc avoir lieu. L'inversion mène donc au couple BS F2 - SS H3 propageant ainsi une autre inversion entre les noeuds H et J comme illustré sur la figure 10, le module radio H1 devant BS et le module radio J3 devenant SS.

Par ailleurs, le module radio J1 passe du statut SS d'écoute à BS. Le NH résultant du fusionnement est donc le module radio D1. Ceci règle automatiquement le problème du NH, qui doit être unique après un fusionnement.

Selon la règle 6b, dans un noeud, il est autorisé d'avoir en même temps -pour une durée limitée ou illimitée- plusieurs modules radios en mode SS, à condition qu'une seule de ces SS soit utilisée pour la synchronisation du noeud.

Si la règle 6b est appliquée, alors le réseau peut rester dans la même configuration que dans la figure 9.

Tous les exemples considérés ci-après ci-dessous appliquent la règle 6a.

Par ailleurs, lors du fusionnement de deux sous-réseaux, on considérera deux cas, lors de l'application de la règle 6a (1 seule SS, connectée ou apte à être connectée, par noeud) :
- l'un sans optimisation de la topologie,
- l'autre avec.

Le cas du fusionnement sans optimisation de la topologie consiste simplement à appliquer un principe de premier noeud découvert : on considère que le premier noeud qui découvre l'autre exécute la procédure d'inversion de topologie.

Ainsi un module radio d'un noeud x d'un réseau fonctionnant en cycle dual, qui a détecté, lors de son écoute en mode SS, un module radio BS d'un noeud y n'appartenant pas à ce réseau, reste en mode SS et poursuit la procédure d'association et synchronisation avec cette BS détectée, pendant que l'unité de commande du noeud x commande le passage en BS du module radio du noeud x qui était jusqu'alors en mode SS.

Si une BS d'un noeud distant était connectée à ce module radio du noeud x jusqu'alors en mode SS, lors du passage de ce dernier en BS, la connexion est rompue. Le module radio BS du noeud distant doit alors effectuer un cycle dual dès que cette connexion est rompue, et il va découvrir en mode SS pendant son cycle dual la BS du module radio du noeud x. Sous le contrôle de l'unité de commande du noeud distant, le module radio va donc sortir du cycle dual pour passer en mode SS et se connecter avec la BS du noeud x (connexion inversée), tandis que l'inversion de mode se poursuit dans le noeud distant, le module radio jusqu'alors en mode SS passant en mode BS etc. L'inversion de topologie est propagée de proche en proche.

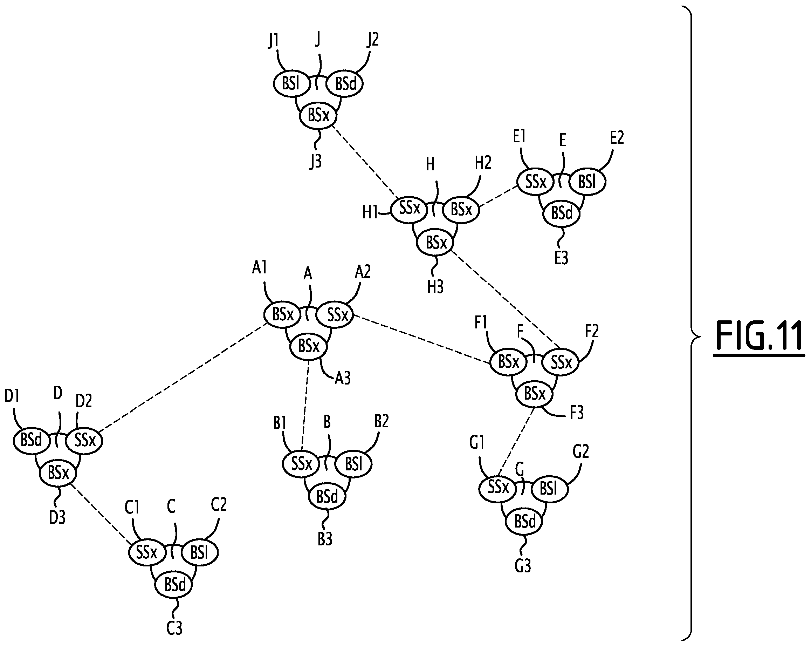

La figure 11 représente la finalisation du fusionnement de l'exemple précédent sans optimisation de topologie suite à la configuration représentée en figure 8, suivi du premier stade de fusionnement représenté en figure 9, dans le cas où c'est le module radio F2 du noeud F qui a détecté, dans son cycle dual, en mode SS la radio H3 du noeud H en premier (et non le module radio H3 du noeud H qui a détecté, dans son cycle dual, en mode SS la radio F2 du noeud F en premier).

Dans cet exemple, l'inversion a été effectuée jusqu'au niveau du NH (noeud D). Celui-ci étant responsable de la synchronisation du réseau, dans un mode de réalisation, il est évité d'inverser les modes SS/BS des modules radios pour ce dernier.

Dans le cas du fusionnement avec optimisation de la topologie mentionné ci-dessus, chaque BS libre d'un réseau transmet la taille de celui-ci, par exemple dans le préambule de trame (l'indication de cette taille peut être faite de diverses manières, par exemple en indiquant le nombre de noeuds total dans le réseau).

Dans ce cas, un module radio en cycle dual d'un noeud x, qui détecte lors de son mode SS, un noeud y appartenant à un réseau de taille moins importante ignore celui-ci, sous le contrôle de l'unité de commande. Lors du mode BS du cycle dual de ce module radio du noeud x, il détecte le module radio en mode SS en cycle dual du réseau de moindre envergure qui initialise alors l'inversion de topologie dans son réseau (on notera que cette solution est toujours valable avec des antennes omni directionnelles mais ne pourra pas toujours être mise en oeuvre dans le cas d'antennes directives).

Ainsi, par cette méthode, c'est toujours le plus petit des réseaux qui se rattache au plus grand.

Une variante consiste à diffuser non pas la taille d'un réseau, mais son importance (dans le cas où une hiérarchie entre réseaux devrait être respectée) et le réseau de moindre importance fusionne alors avec celui qui a le plus d'importance.

Dans un mode de réalisation, c'est le niveau de hiérarchie de la BS en cycle dual dans l'arborescence du réseau qui va conditionner le réseau dans lequel l'inversion de topologie va avoir lieu, de façon combinée ou non avec les critères précédents de taille ou d'importance.

La figure 10 correspond à un exemple de finalisation de fusionnement avec optimisation de réseau, suite à la configuration de rapprochement illustrée en figure 8.

Le réseau 101 étant plus gros, c'est le module radio H3 en cycle dual du noeud H, qui détecte lors de son mode SS (l'unité de commande refusant alors l'établissement d'une connexion entre le module radio H3 en mode BS de cycle dual et le module radio en mode SS de cycle dual). La connexion entre H3 en SS et F2 en BS va donc s'établir. L'inversion de topologie pour respecter un unique SS par noeud est alors mise en oeuvre dans la partie qui correspondait au réseau 100, avec le passage en cycle dual de H1 et de J3, et après l'établissement de la connexion entre la SS J3 et la BS H1, le passage en mode BS de B1.

La règle 6a empêche naturellement tout rebouclage entre les noeuds B et G.

Le principe 6b ne l'empêche pas ce qui oblige à édicter des contraintes de non rebouclage.

Dans ce dernier cas, on peut envisager plusieurs principes pour éviter le rebouclage.

Si le NH a une connaissance globale du réseau et effectue le choix des routes, alors celui-ci peut interdire tout lien entre les noeuds B et G. Cependant tant que ces deux noeuds restent en portée, le NH peut garder ce lien en réserve comme lien possible afin de pallier plus rapidement des ruptures de liaisons.

L'entrée tardive d'un noeud dans un réseau déjà constitué est en fait le cas le plus fréquemment rencontré. En effet, tous les noeuds ne sont jamais mis sous tension en même temps.

Le problème consiste surtout à déterminer les différents cas d'ancrage possible d'un noeud par rapport à une structure déjà en place.

Deux variantes sont proposées pour répondre à ce problème, selon les règles 7a et 7b.

Selon la règle 7a, on garde en toute circonstance par noeud d'un réseau constitué un module radio en cycle dual BS-SS, i.e. non connecté, pour respectivement l'émission de préambules et l'écoute, afin de pouvoir raccorder des sous-groupes ou des noeuds isolés.

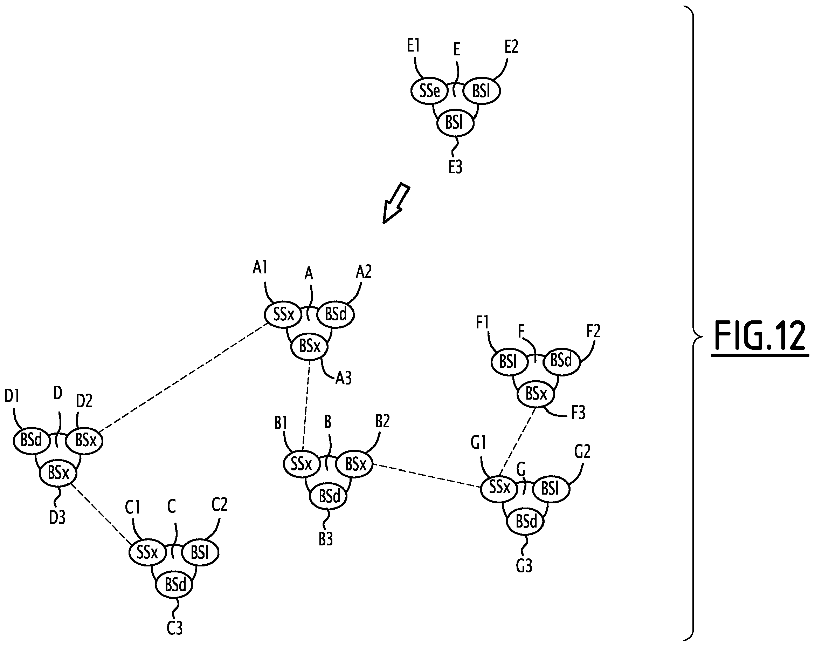

Lors de la phase SS du cycle dual du module radio, il pourra se connecter à une des deux BS de la station isolée dans le réseau. Il est également possible que la station isolée se connecte avec sa SS au réseau lors de la phase BS du module radio en cycle dual. La figure 12 présente cette première option avec un module radio en cycle dual pour chaque noeud du réseau constitué.

Dans cette solution, les liens entre les noeuds doivent être établis afin de toujours conserver une des radios non connectée en cycle dual BS-SS. Ainsi si le noeud isolé E se raccorde au noeud F par connexion entre une BS E2 ou E3 et le module radio F2 du noeud F lorsque F2 est en phase SS de son cycle dual, alors la radio F1 du noeud F devra à son tour passer en mode dual BS/SS.

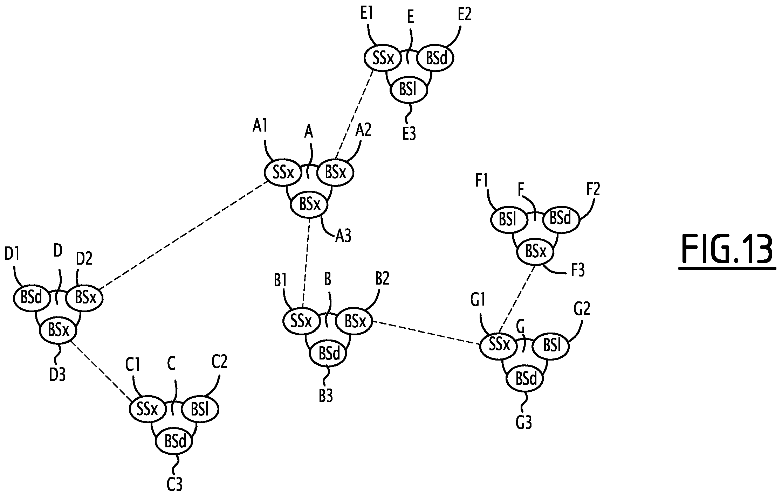

On peut avoir le fonctionnement suivant selon les modules radio détectés :
Si une des BS E2 ou E3 du noeud E entend la phase SS du module radio A2 du noeud A et :
   - si la règle 6b est appliquée, alors le noeud A aura deux SS (A1 et A2) et aucune inversion ne sera effectuée dans le réseau ;
   - si la règle 6a est appliquée, alors l'unité de commande du noeud A doit envoyer un message au noeud E en demandant si la SS de ce dernier est libre. Si c'est le cas, la SS E1 du noeud E doit se raccorder à au module radio A2 du noeud A comme représenté en figure 13, ceci à condition que les antennes de A2 et E1 leur permettent de se voir.

Selon la règle 7a, on garde toujours un module radio en cycle dual BS-SS avec un mode SS non connectée à une BS afin de pouvoir raccorder des sous-groupes ou des noeuds isolés, sous le pilotage de l'unité de commande. Un scanning permanent est ainsi garanti, afin d'indiquer aux radios SS libres d'un noeud quelles sont les BS en portée.

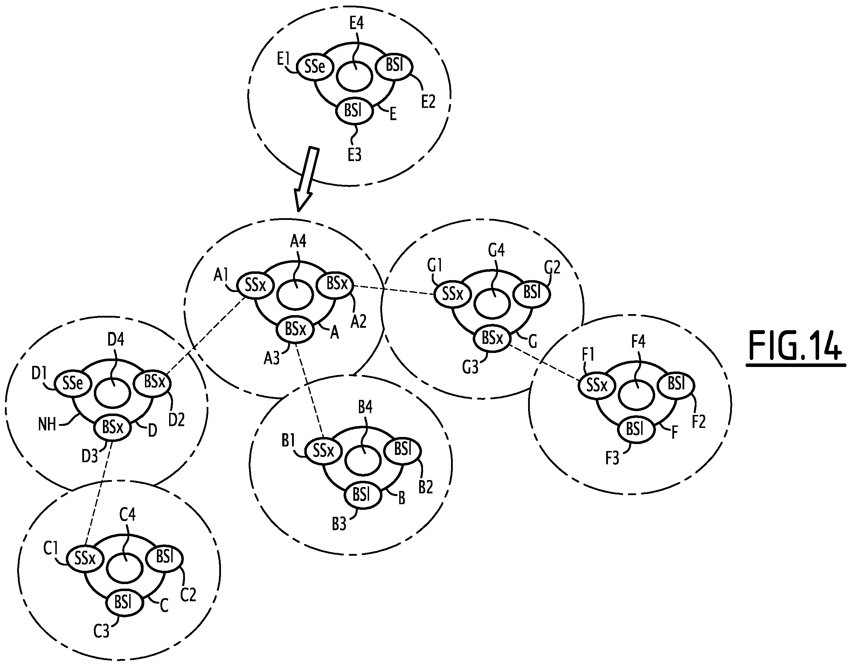

En application du principe 7b, une deuxième solution consiste à conserver constamment une des radios du noeud en SS pure (à faible coût par exemple) couplée par exemple à une antenne omni directionnelle dédiée permettant d'écouter en permanence la présence éventuelle de BS. Cette station ne sera jamais connectée à une BS. Chaque noeud du réseau est donc constitué de N-1 radios pouvant fonctionner en mode BS ou en mode SS et d'une radio SS (à bas coût par exemple) comme représenté en figure 14, où chaque noeud X trois radios X1, X2, X3 pouvant fonctionner en mode BS ou en mode SS et une quatrième radio X4 fonctionnant en SS, avec X égal à A, B, C, D, E, F, G.

En application du principe 7b, il n'est plus nécessaire d'avoir des modules radios en mode dual BS/SS même dans le cas d'utilisation d'antennes sectorielles, puisqu'un module radio (X4) est toujours en mode d'écoute avec une antenne omni directionnelle.

La SS en écoute pure (X4) ne doit pas écouter les préambules des N-1 autres radios du noeud (radios locales). Ceci est réalisé par une procédure intégrée à l'unité de commande.

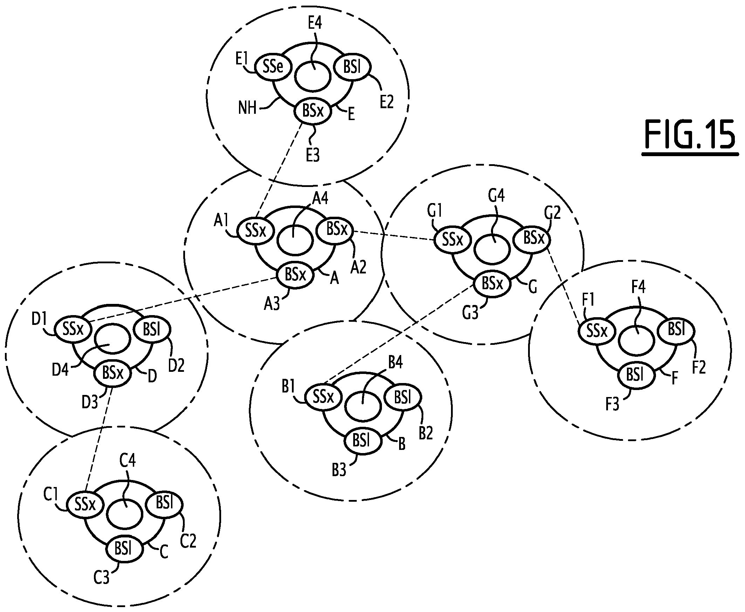

Lors de l'entrée d'un noeud orphelin dans le réseau comme considéré en figure 14, on peut avoir deux cas distincts :
1) Le module radio en écoute pure A4 du noeud A détecte la BS E3 du noeud E. Si aucune autre règle n'est érigée, le noeud A va devoir raccorder sa SS A1 à la BS3 du noeud E. Tous les modules radios du noeud A étant déjà connectés, des changements vont devoir être effectués dans le réseau. La figure 15 donne la configuration du réseau après l'intégration du noeud orphelin E. Il est à noter que ce réseau n'est possible que si les noeuds B et G sont en portée radio. De plus, le noeud E devient le NH.
2) La SS4 du noeud E détecte la BS A2 du noeud A. Si aucune autre règle n'est érigée, le noeud E va devoir raccorder sa SS E1 à la BS A2 du noeud A. Tous les modules radios du noeud A étant connectés, des changements vont devoir être effectués dans le réseau. La configuration résultante sera différente de celle illustrée en figure 15.

Le choix du canal fréquentiel affecté à chaque BS (et donc utilisé pour la connexion entre la BS et une SS) peut être effectué de diverses façons.

Dans un mode de réalisation correspondant à un choix préprogrammé des canaux, les canaux fréquentiels des BS sont figés, avant tout déploiement, par programmation. Les canaux des BS d'un même noeud sont choisis de façon quelconque dans le spectre. Toutefois, une séparation spectrale, sans être strictement nécessaire, est recommandée. Par exemple, si la bande permet de mettre en oeuvre 45 canaux alors, dans le cas de 3 BS dans un noeud, on choisira les canaux 1, 15, 30 ou 2, 16, 31, ... et ainsi de suite pour chacun des noeuds. Cela permet de déployer sur un même site 15 noeuds à 3 BS par noeud. Avec 2 BS par noeud, on obtient 22 noeuds. Ceci n'est qu'un exemple.

La SS ne choisit pas de canal puisqu'elle doit scanner tous les canaux possibles afin de se raccorder éventuellement à une BS.

Dans un autre mode de réalisation correspondant à un choix des canaux fréquentiels en fonction de la topologie, le noeud NH est considéré de niveau 0 (niveau le plus haut dans l'arbre).

La(es) station(s) de niveau 1 se connecte(nt) au NH à travers sa(leurs) SS. La fréquence de celle(s)-ci est donc fixée par la BS du NH.

La(es) station(s) de niveau 2 se connecte(nt) aux stations de niveau 1 à travers sa(leurs) SS. La fréquence de celle(s)-ci est donc fixée par les BS du niveau 1 selon un ordre prédéterminé.

La cascade de valeurs de canaux est donc déduite en partant de la racine du réseau.

Lors de la fusion de sous-réseaux, ceci est revu d'une manière globale dans le réseau résultant.

Dans un autre mode de réalisation correspondant à un choix aléatoire des canaux fréquentiels, les fréquences des BS d'un noeud n'ayant aucune connexion (noeud NH) sont choisies de manière aléatoire parmi les canaux disponibles avec un écart entre les fréquences de BS d'au moins i canaux.

Pour permettre des communications haut débit sur le réseau moléculaire, des techniques avancées d'allocations de ressources sont nécessaires afin d'optimiser au mieux l'emploi de la ressource spectrale (en anglais « spectral reuse »), notamment à l'aide de la technique S-TDMA (réutilisation des canaux de transmission à divers endroits du réseau avec une interférence mutuelle maîtrisée entre les communications menées en parallèle). En bref, on peut considérer que la technique S-TDMA proposée permet de mettre en oeuvre au même instant de la trame WiMAX, sur une même fréquence, des échanges entre des paires de noeuds distincts.

En pratique, l'algorithme d'allocation qui est mis en oeuvre se déroule au niveau protocolaire MAC (Medium Access Control). Il prend en compte les positions relatives des noeuds et leurs besoins de communications (types de communications, destinataires, débits nécessaires, volumes, ...) pour déterminer les allocations et donc le paramétrage des noeuds de communications pour chaque slot de la trame TDMA.

De plus, les noeuds pouvant être en mouvement, l'allocation de ressources doit être suffisamment dynamique pour garantir un niveau d'interférence maximal admissible entre les différentes communications. Ce niveau d'interférence doit être estimé en permanence à travers la fonction d'A-DFS (Advanced-Dynamic Frequency Selection).

Un protocole de routage permettant de router les données en prenant en compte les créations / mises à jour / destructions de routes avec diffusion globale est nécessaire pour éviter l'utilisation de routes obsolètes lors de changements de topologie par exemple dus à la rupture de certains liens.

Des données reçues par un module radio d'un noeud, qu'il soit SS ou BS, sont transmises localement à un autre module radio, SS ou BS, du noeud sous le pilotage de l'unité de commande, en fonction de la destination finale des données et de la table de routage mémorisée au niveau du noeud. Cet autre module radio relaye ensuite ces données en les émettant à son tour vers un module radio (d'un autre noeud) auquel il est connecté, en fonction de la destination finale des données et de la table de routage mémorisée au niveau du noeud

Les tables de routage peuvent être centralisées au niveau du NH et/ou locales au niveau de chaque noeud.

Dans le cas de tables de routage présentes uniquement au niveau du NH, chaque noeud souhaitant communiquer avec une destination doit demander au NH la route à utiliser. Cela entraîne donc un délai pour l'établissement des communications, ce qui est pénalisant.

Dans un mode de réalisation, il existe donc des tables de routage locales (ie mémorisées dans tous les noeuds) permettant ainsi de relayer les informations sans en faire la demande au NH. Deux approches sont classiquement utilisées :
- une approche de type « Link State » pour laquelle chaque noeud a la connaissance globale de la topologie du réseau,
- une approche de type distance « Distance Vector Approach » pour laquelle chaque noeud i maintient pour chaque destination x le nombre de sauts nécessaires (dij(x)) pour atteindre la destination x en passant par chacun de ses voisins j. Les paquets sont alors envoyés par le chemin le plus court. Chaque noeud doit alors diffuser à tous ses voisins les distances calculées pour atteindre chaque destination.

On considère ci dessous le premier cas pour lequel chaque noeud du réseau a localement une connaissance globale de la topologie du réseau. Le NH est responsable du calcul de la table de routage et doit diffuser cette table à tous les noeuds du réseau (par exemple dans un paquet de données juste après l'envoi du beacon -encore appelé préambule-) en utilisant le relayage entre les noeuds du réseau. Ainsi un noeud devant relayer un paquet dans le réseau n'aura qu'à lire dans sa table de routage locale. Comme dans tous les protocoles de routage ad-hoc, la table de routage calculée par le NH est régulièrement remise à jour. Afin que le NH calcule les différentes routes possibles, chaque noeud doit faire remonter régulièrement au NH ses voisins potentiels à un bond ainsi que les connections établies (en effet certaines connections peuvent être interdites même si les noeuds sont en visibilité radio).

Dans un mode de réalisation :
- chaque noeud doit faire remonter au NH ses voisins à un bond et ses connections BS-SS ; et/ou
- tout noeud du réseau qui détecte une perte de connexion doit en informer le NH en lui envoyant un message pour mettre à jour la table de routage ; et le NH doit aussitôt diffuser sur le réseau cette perte de lien et doit lever les interdictions de connections entre les noeuds en portée s'il en a connaissance. L'établissement du nouveau réseau après la rupture de lien se fait alors de la même manière que lors du regroupement de deux sous réseaux.

L'invention a été décrite ci-dessus en considérant que l'unité de commande dans chaque noeud est une entité distincte des modules radios. Néanmoins, l'invention peut être mise en oeuvre avec une unité de commande dont au moins une partie est distribuée dans un ou plusieurs module(s) radio(s) du noeud.

## Revendications

1. Station émettrice/réceptrice (1) pour former un noeud d'un réseau de télécommunications, ladite station comportant au moins deux modules radio (3, 4, 5) émetteur/récepteur et un module de commande (2) et dans laquelle :
chaque module émetteur/récepteur est adapté pour fonctionner alternativement en tant que station « abonné » (SS) pour établir une connexion avec une station de base d'un premier autre noeud et en tant que station de base (BS) pour établir une connexion avec une station « abonné » d'un second autre noeud, en fonction de commandes du module de commande,
**caractérisée en ce que** :
- le module de commande est adapté pour déterminer ou recevoir au moins une modification de l'état du réseau et pour commander dynamiquement au moins un changement de fonctionnement d'au moins un module émetteur/récepteur, de station « abonné » vers station de base ou inversement, en fonction d'au moins la modification déterminée ; et que
- le module de commande est adapté pour que le nombre de stations « abonné » connectées à une station de base soit au plus égal à 1.

2. Station émettrice/réceptrice (1) selon la revendication 1, dans laquelle, lorsque le noeud ne comporte plus de station « abonné » (SS) non connectée, le module de commande (2) est adapté pour commander un fonctionnement alternativement en station de base et en station « abonné » d'au moins un émetteur/récepteur non connecté du noeud.

3. Station émettrice/réceptrice (1) selon la revendication 2, dans laquelle ledit fonctionnement est alterné en fonction d'un paramètre temporel aléatoire.

4. Station émettrice/réceptrice (1) selon la revendication 2 ou 3, dans laquelle ladite station constituant un noeud d'un premier réseau :
- une station de base non connectée du noeud est adaptée pour insérer un paramètre indiquant un degré d'importance du premier réseau dans une trame émise par ladite station de base ; et/ou
- lorsqu'au cours d'un fonctionnement alterné d'un module émetteur/récepteur du noeud, ledit module émetteur récepteur fonctionnant alors en station « abonné » détecte une trame d'une station de base non connectée d'un autre noeud d'un second réseau distinct du premier réseau, ladite trame indiquant un degré d'importance du second réseau, le module de commande du noeud du premier réseau est adapté pour
- si le degré d'importance du second réseau est inférieur à un degré d'importance du premier réseau, interdire la connexion entre le module émetteur/récepteur fonctionnant en station « abonné » dudit noeud et ladite station de base de l'autre noeud ; et
- si le degré d'importance du second réseau est supérieur au degré d'importance du premier réseau, autoriser la connexion entre le module émetteur/récepteur du noeud fonctionnant en station « abonné » et ladite station de base de l'autre noeud.

5. Station émettrice/réceptrice (1) selon l'une quelconque des revendications 2 à 4, dans laquelle :
- lorsqu'au cours d'un fonctionnement alterné d'un module émetteur récepteur du noeud, une connexion, jugée prioritaire, s'établit entre une station de base d'un autre noeud et ledit module émetteur/récepteur fonctionnant alors en station « abonné », et que le nombre de stations « abonné » connectées dans le noeud est supérieur ou égal à 2, le module de commande commande audit module émetteur/récepteur la sortie du fonctionnement alterné et le maintient en station « abonné » tandis qu'il commande aux autres modules émetteurs/récepteurs connectés du noeud qui fonctionnent alors en station « abonné » le passage en station de base.

6. Station émettrice/réceptrice (A) selon la revendication 1, connectée à un réseau et comportant en outre un module émetteur/récepteur donné (A4) qui est adapté pour fonctionner uniquement en station « abonné » non connectée,
dans laquelle lorsque le module émetteur/récepteur donné détecte une station de base non connectée d'un noeud non connecté au réseau, alors le module de commande commande qu'une station « abonné » de la station émettrice/réceptrice se connecte à ladite station de base.

7. Station émettrice/réceptrice (1) selon l'une quelconque des revendications précédentes, dans laquelle
- ladite station de base du noeud est adaptée pour indiquer son état, connecté ou non connecté, dans une trame qu'elle émet; et le module de commande (2) est adapté pour refuser une connexion de la station « abonné » du noeud avec une station de base d'un autre noeud ayant émis un préambule indiquant un état connecté ; et/ou
- le module de commande est adapté pour refuser toute connexion de ladite station de base du noeud avec une station « abonné » d'un autre noeud lorsque ladite station de base du noeud est déjà connectée.

8. Station émettrice/réceptrice (1) selon l'une quelconque des revendications précédentes, dans laquelle le module de commande est adapté pour interdire une connexion entre le noeud et un autre noeud, lorsqu'il existe déjà une connexion entre ledit noeud et ledit autre noeud.

9. Station émettrice/réceptrice (1) selon l'une quelconque des revendications précédentes, dans laquelle une station « abonné » du noeud fournit un signal de synchronisation à une station de base du noeud, ledit signal de synchronisation étant fonction d'un signal reçu par ladite station « abonné » et transmis par la station de base d'un autre noeud qui est connectée à la station « abonné ».

10. Station émettrice/réceptrice (1) selon la revendication précédente, comportant plusieurs stations « abonné », adaptée pour qu'une seule desdites stations « abonné » du noeud fournisse un signal de synchronisation à chaque station de base du noeud.

11. Station émettrice/réceptrice (1) selon l'une quelconque des revendications précédentes, dans laquelle un signal de synchronisation fonction d'un signal issu de GPS est fourni à l'ensemble des stations de base de la station émettrice/réceptrice.

12. Station émettrice/réceptrice (1) selon l'une quelconque des revendications précédentes, dans laquelle le module de commande est adapté pour commander la station « abonné » du noeud cherchant à se connecter à une station de base pour ne pas écouter un préambule émis par une station de base du noeud.

13. Procédé de communication dans un réseau de télécommunication comportant des stations émettrices/réceptrices formant des noeuds du réseau, une station émettrice/réceptrice comportant un module de commande et au moins deux modules radio émetteur/récepteur adaptés chacun pour fonctionner alternativement en tant que station « abonné » (SS) pour établir une connexion avec une station de base d'un premier autre noeud et en tant que station de base (BS) pour établir une connexion avec une station « abonné » d'un second autre noeud, en fonction de commandes du module de commande, selon lequel, dans chaque station émettrice/réceptrice :
ledit procédé étant **caractérisé en ce que** :
- il est déterminé au moins une modification de l'état du réseau, - au moins un changement de fonctionnement d'au moins un module émetteur/récepteur, de station « abonné » vers station de base ou inversement, est commandé dynamiquement en fonction d'au moins la modification déterminée ;
et **en ce que**
- le nombre de stations « abonné » connectées à une station de base doit être au plus égal à 1.

14. Procédé de communication selon la revendication 13, selon lequel lorsque ladite station émettrice/réceptrice ne comporte plus de station « abonné » (SS) non connectée, le module de commande (2) de la station émettrice/réceptrice est adapté pour commander un fonctionnement alternativement en station de base et en station « abonné » d'au moins un émetteur/récepteur non connecté de la station émettrice/réceptrice.

## Patentansprüche

1. Sende-/Empfangsstation (1) zum Bilden eines Telekommunikationsnetzknotens, wobei die Station mindestens zwei Funksende-/Funkempfangsmodule (3, 4, 5) und ein Steuermodul (2) umfasst, und wobei:
jedes Sende-/Empfangsmodul dazu angepasst ist, in Abhängigkeit von Befehlen des Steuermoduls abwechselnd als "Teilnehmer"-Station (SS), um eine Verbindung mit einer Basisstation eines ersten anderen Knotens herzustellen, und als Basisstation (BS) zu arbeiten, um eine Verbindung mit einer "Teilnehmer"-Station eines zweiten anderen Knotens herzustellen,
**dadurch gekennzeichnet, dass**
- das Steuermodul dazu angepasst ist, mindestens eine Veränderung des Zustands des Netzes zu bestimmen oder zu empfangen, und in Abhängigkeit von zumindest der bestimmten Veränderung mindestens einen Betriebswechsel des mindestens einen Sende-/Empfangsmoduls von der "Teilnehmer"-Station zur Basisstation oder umgekehrt dynamisch zu steuern; und dass
- das Steuermodul so angepasst ist, dass die Anzahl von auf die Basisstation aufgeschalteten "Teilnehmer"-Stationen höchstens gleich 1 ist.

2. Sende-/Empfangsstation (1) nach Anspruch 1, wobei, wenn der Knoten keine nicht aufgeschaltete "Teilnehmer"-Station (SS) mehr umfasst, das Steuermodul (2) dazu angepasst ist, einen Betrieb abwechselnd als Basisstation und als "Teilnehmer"-Station mindestens eines nicht auf den Knoten aufgeschalteten Senders/Empfängers zu steuern.

3. Sende-/Empfangsstation (1) nach Anspruch 2, wobei der Betrieb in Abhängigkeit von einem Zufallszeitparameter abwechselnd ist.

4. Sende-/Empfangsstation (1) nach Anspruch 2 oder 3, wobei die Station, die einen Knoten eines ersten Netzes darstellt:
- eine nicht auf den Knoten aufgeschaltete Basisstation dazu angepasst ist, einen Parameter, der einen Wichtigkeitsgrad des ersten Netzes angibt, in einen Frame einzusetzen, der durch die Basisstation ausgesendet wird; und/oder
- wenn während eines abwechselnden Betriebs eines Sende-/Empfangsmoduls des Knotens das nun als "Teilnehmer"-Station fungierende Sende-/Empfangsmodul einen Frame einer nicht aufgeschalteten Basisstation eines anderen Knotens eines zweiten Netzes erfasst, das sich vom ersten Netz unterscheidet, wobei der Frame einen Wichtigkeitsgrad des zweiten Netzes angibt, das Steuermodul des Knotens des ersten Netzes dazu angepasst ist,
- wenn der Wichtigkeitsgrad des zweiten Netzes geringer ist als ein Wichtigkeitsgrad des ersten Netzes, die Verbindung zwischen dem Sende-/Empfangsmodul, das als "Teilnehmer"-Station des Knotens fungiert, und der Basisstation des anderen Knotens zu untersagen; und
- wenn der Wichtigkeitsgrad des zweiten Netzes höher ist als der Wichtigkeitsgrad des ersten Netzes, die Verbindung zwischen dem Sende-/Empfangsmodul, das als "Teilnehmer"-Station des Knotens fungiert, und der Basisstation des anderen Knotens zuzulassen.

5. Sende-/Empfangsstation (1) nach einem der Ansprüche 2 bis 4, wobei:
- wenn sich während eines abwechselnden Betriebs eines Sende-/Empfangsmoduls des Knotens eine als bevorrechtigt eingestufte Verbindung zwischen einer Basisstation eines anderen Knotens und dem Sende-/Empfangsmodul aufbaut, das nun als "Teilnehmer"-Station fungiert, und die Anzahl von in dem Knoten aufgeschalteten "Teilnehmer"-Stationen größer oder gleich 2 ist, das Steuermodul dem Sende-/Empfangsmodul den Ausstieg aus dem abwechselnden Betrieb befiehlt und es als "Teilnehmer"-Station beibehält, während es den anderen aufgeschalteten Sende-/Empfangsmodulen des Knotens, die nun als "Teilnehmer"-Station fungieren, den Übergang in eine Basisstation befiehlt.

6. Sende-/Empfangsstation (1) nach Anspruch 1, die auf ein Netz aufgeschaltet ist und darüber hinaus ein bestimmtes Sende-/Empfangsmodul (A4) umfasst, das dazu angepasst ist, einzig als nicht aufgeschaltete "Teilnehmer"-Station zu fungieren, wobei, wenn das bestimmte Sende-/Empfangsmodul eine nicht aufgeschaltete Basisstation eines nicht auf das Netz aufgeschalteten Knotens erfasst, das Steuermodul befiehlt, dass sich eine "Teilnehmer"-Station der Sende-/Empfangsstation auf die Basisstation aufschaltet.

7. Sende-/Empfangsstation (1) nach einem der vorhergehenden Ansprüche, wobei
- die Basisstation des Knotens dazu angepasst ist, ihren aufgeschalteten oder nicht aufgeschalteten Zustand in einem Frame anzugeben, den sie aussendet; und das Steuermodul (2) dazu angepasst ist, eine Verbindung der "Teilnehmer"-Station des Knotens mit einer Basisstation eines anderen Knotens zu verweigern, der eine Präambel ausgesendet hat, die einen aufgeschalteten Zustand angibt; und/oder
- das Steuermodul dazu angepasst ist, jede Verbindung der Basisstation des Knotens mit einer "Teilnehmer"-Station eines anderen Knotens zu verweigern, wenn die Basisstation des Knotens bereits aufgeschaltet ist.

8. Sende-/Empfangsstation (1) nach einem der vorhergehenden Ansprüche, wobei das Steuermodul dazu angepasst ist, eine Verbindung zwischen dem Knoten und einem anderen Knoten zu untersagen, wenn bereits eine Verbindung zwischen dem Knoten und dem anderen Knoten besteht.

9. Sende-/Empfangsstation (1) nach einem der vorhergehenden Ansprüche, wobei eine "Teilnehmer"-Station des Knotens ein Synchronisationssignal an eine Basisstation des Knotens schickt, wobei das Synchronisationssignal von einem Signal abhängt, das an der "Teilnehmer"-Station eingeht und von der Basisstation eines anderen Knotens übertragen wurde, der auf die "Teilnehmer"-Station aufgeschaltet ist.

10. Sende-/Empfangsstation (1) nach dem vorhergehenden Anspruch, mehrere "Teilnehmer"-Stationen umfassend, die so angepasst ist, dass eine einzige der "Teilnehmer"-Stationen des Knotens ein Synchronisationssignal an jede Basisstation des Knotens schickt.

11. Sende-/Empfangsstation (1) nach einem der vorhergehenden Ansprüche, wobei ein Synchronisationssignal, das von einem Signal abhängt, das von einem GPS abgegeben wurde, an die Gesamtheit der Basisstationen der Sende-/Empfangsstation geschickt wird.

12. Sende-/Empfangsstation (1) nach einem der vorhergehenden Ansprüche, wobei das Steuermodul dazu angepasst ist, die "Teilnehmer"-Station des Knotens, der versucht, sich auf eine Basisstation aufzuschalten, so zu steuern, dass sie nicht auf eine von einer Basisstation des Knotens ausgesendete Präambel hört.

13. Kommunikationsverfahren in einem Telekommunikationsnetz, das Sende-/Empfangsstationen umfasst, die Knoten des Netzes bilden, wobei eine Sende-/Empfangsstation ein Steuermodul und mindestens zwei Funksende-/Funkempfangsmodule umfasst, die jeweils dazu angepasst sind, in Abhängigkeit von Befehlen des Steuermoduls abwechselnd als "Teilnehmer"-Station (SS), um eine Verbindung mit einer Basisstation eines ersten anderen Knotens herzustellen, und als Basisstation (BS) zu arbeiten, um eine Verbindung mit einer "Teilnehmer"-Station eines zweiten anderen Knotens herzustellen, wobei in jeder Sende-/Empfangsstation das Verfahren **dadurch gekennzeichnet ist, dass**:
- mindestens eine Veränderung des Zustands des Netzes bestimmt wird,
- mindestens ein Betriebswechsel mindestens eines Sende-/Empfangsmoduls einer "Teilnehmer"-Station zu einer Basisstation oder umgekehrt dynamisch in Abhängigkeit von zumindest der bestimmten Veränderung gesteuert wird; und dass
- die Anzahl von auf eine Basisstation aufgeschalteten "Teilnehmer"-Stationen höchstens gleich 1 betragen soll.

14. Kommunikationsverfahren nach Anspruch 13, wobei, wenn die Sende-/Empfangsstation keine nicht aufgeschaltete "Teilnehmer"-Station (SS) mehr umfasst, das Steuermodul (2) der Sende-/Empfangsstation dazu angepasst ist, einen Betrieb abwechselnd als Basisstation und als "Teilnehmer"-Station mindestens eines nicht auf die Sende-/Empfangsstation aufgeschalteten Senders/Empfängers zu steuern.

## Claims

1. A transceiver station (1) for forming a telecommunication network node, said station comprising at least two transceiver radio modules (3, 4, 5) and a control module (2) and wherein:
each transceiver module is adapted to operate alternatively as a "subscriber" station (SS) to establish a connection with a base station of a first other node and as a base station (BS) to establish a connection with a "subscriber" station of a second other node, as a function of commands from the control module,
**characterized in that**:
- the control module is adapted to determine or receive at least one modification of the state of the network and to dynamically control at least one change in the operation of at least one transceiver module, from "subscriber" station to base station or vice versa, as a function of at least the determined modification; and **in that**
- the control module is adapted so that the number of "subscriber" stations connected to a base station is at most equal to 1.

2. The transceiver station (1) according to claim 1, wherein, when the node no longer comprises any "subscriber" station (SS) that is not connected, the control module (2) is adapted to control an operation alternatively as base station and "subscriber" station of at least one non-connected transceiver of the node.

3. The transceiver station (1) according to claim 2, wherein said operation is alternated as a function of a random time parameter.

4. The transceiver station (1) according to claim 2 or 3, wherein said station making up a node of a first network:
- a non-connected base station of the node is adapted to insert a parameter indicating a degree of importance of the first network in a frame transmitted by said base station; and/or
- when, during an alternating operation of a transceiver module of the node, said transceiver module then operating as a "subscriber" station detects a frame from a non-connected base station of another node of a second network separate from the first network, said frame indicating a degree of importance of the second network, the control module of the node of the first network is adapted to
- if the degree of importance of the second network is lower than a degree of importance of first network, prohibit the connection between the transceiver module operating as "subscriber" station of said node and said base station of the other node; and
- if the degree of importance of the second network is higher than the degree of importance of the first network, authorize the connection between the transceiver module of the node operating as "subscriber" station and said base station of the other node.

5. The transceiver station (1) according to any of claims 2 to 4, wherein:
- when, during alternating operation of a transceiver module of the node, a connection, deemed high-priority, is established between a base station of another node and said transceiver module then operating as "subscriber" station, and the number of "subscriber" stations connected in the node is greater than or equal to 2, the control module commands said transceiver module to leave the alternating operation and to keep as a "subscriber" station while it commands the other connected transceiver modules of the node then operating as "subscriber" stations to transition to base station.

6. The transceiver station (A) according to claim 1, connected to a network and also comprising a given transceiver module (A4) that is adapted to operate only as a non-connected "subscriber" station,
wherein when the given transceiver module detects a non-connected base station of a node not connected to the network, then the control module commands that a "subscriber" station of the transceiver station connect to said base station.

7. The transceiver station (1) according to any of the preceding claims, wherein
- said base station of the node is adapted to indicate its status, connected or not connected, in a frame that it transmits; and the control module (2) is adapted to refuse a connection of the "subscriber" station of the node with a base station of another node having transmitted a preamble indicating a connected status; and/or
- the control module is adapted to refuse any connection of said base station of the node with a "subscriber" station of another node when said base station of the node is already connected.

8. The transceiver station (1) according to any of the preceding claims, wherein the control module is adapted to prohibit a connection between the node and another node, when there is already a connection between said node and said other node.

9. The transceiver station (1) according to any of the preceding claims, wherein a "subscriber" station of the node provides a synchronization signal to a base station of the node, said synchronization signal depending on a signal received by said "subscriber" station and transmitted by the base station of another node that is connected to the "subscriber" station.

10. The transceiver station (1) according to the preceding claim, comprising several "subscriber" stations, being adapted for only one of said "subscriber" stations of the node to provide a synchronization signal to each base station of the node.

11. The transceiver station (1) according to any of the preceding claims, wherein a synchronization signal depending on a signal from GPS is provided to all of the base stations of the transceiver station.

12. The transceiver station (1) according to any of the preceding claims, wherein the control module is adapted to command the "subscriber" station of the node seeking to connect to a base station not to listen to a preamble transmitted by a base station of the node.

13. A communication method in a telecommunication network comprising transceiver stations forming network nodes, a transceiver station comprising a control module and at least two transceiver radio modules each adapted to operate alternatively as "subscriber" station (SS) to establish a connection with a base station of a first other node and as base station (BS) to establish a connection with a "subscriber" station of a second other node, as a function of commands from the control module, according to which, in each transceiver station:
the method being **characterized in that**:
- at least one modification of the status of the network is determined,
- at least one operating change of at least one transceiver module, from "subscriber" station to base station or vice versa, is dynamically commanded as a function of at least the determined modification;
and **in that**
- the number of "subscriber" stations connected to a base station must be at most equal to 1.

14. The communication method according to claim 13, wherein, when said transceiver station no longer comprises any non-connected "subscriber" stations (SS), the control module (2) of the transceiver station is adapted to command an operation alternatively as base station and "subscriber" station of at least one non-connected transceiver of the transceiver station.
